# EUROPEAN PATENT SPECIFICATION

(11) **EP 4 437 797 B1**
(45) Date of publication and mention of the grant of the patent: **31.12.2025**
(21) Application number: 22817731.7
(22) Date of filing: 15.11.2022
(51) Int. Cl.: H04W 74/00, H04W 88/00, H04W 74/02

(54) **PER TRAFFIC CLASS CONFIGURATION OF CHANNEL ACCESS METHOD**
PRO VERKEHRKLASSE KONFIGURATION EINES KANALZUGRIFFSVERFAHRENS
CONFIGURATION DE CLASSE DE TRAFIC D'UN PROCÉDÉ D'ACCÈS AU CANAL

(30) Priority: 26.11.2021 US 202163283321 P
(43) Date of publication of application: 02.10.2024
(73) Proprietor: Telefonaktiebolaget LM Ericsson (publ), 164 83 Stockholm (SE)
(72) Inventor: SEDIN, Jonas, Brentford TW8 0SU (GB); AMBEDE, Abhishek, 141 58 Huddinge (SE); DI TARANTO, Rocco, 223 59 Lund (SE); MAX, Sebastian, 50737 Cologne (DE)
(74) Representative: Ericsson
(86) International application number: PCT/EP2022/082036
(87) International publication number: WO 2023/094225

(56) References cited:
- US-B2- 11 032 852
- 802 11 WORKING GROUP OF THE LAN/MAN STANDARDS COMMITTEE OF THE IEEE COMPUTER SOCIETY: "Draft Standard for Information technology- Tele- communications and information exchange between systems Local and metropolitan area networks- Specific requirements ? ? Part 11: Wireless LAN Medium Access Control ? (MAC) and Physical Layer (PHY) Specifications ? ? Amendment 8: Enhancements for extre", vol. 802.11be drafts, no. D1.3, 17 November 2021 (2021-11-17), pages 1 - 875, XP068192095, Retrieved from the Internet <URL:https://grouper.ieee.org/groups/802/11/private/Draft_Standards/11be/Draft%20P802.11be_D1.3_redline_compared_to_D1.0.pdf> [retrieved on 20211117]
- DENG CAILIAN ET AL: "IEEE 802.11be Wi-Fi 7: New Challenges and Opportunities", IEEE COMMUNICATIONS SURVEYS & TUTORIALS, IEEE, USA, vol. 22, no. 4, 29 July 2020 (2020-07-29), pages 2136 - 2166, XP011821374, DOI: 10.1109/COMST.2020.3012715

## Description

### Technical Field

The present disclosure relates to methods for controlling wireless transmissions and to corresponding devices, systems, and computer programs.

### Background

In wireless communication technologies, there is an increased interest in using unlicensed bands, also referred to as license-exempt bands, like the 2.4 GHz ISM band, the 5 GHz band, the 6 GHz band, and the 60GHz band using more advanced channel access technologies. Historically, Wi-Fi has been the dominant standard in license-exempt bands when it comes to applications requiring support for high data rates. Due to the large available bandwidth in the license-exempt bands, the WLAN (Wireless Local Area Network) technology based on the IEEE 802.11 standards family provides a very simple distributed channel access mechanism based on a so-called distributed coordination function (DCF).

Distributed channel access means that a device, in IEEE 802.11 terminology known as a station (STA), tries to access the wireless channel when it has data to send. Effectively there is no difference in channel access whether the station is an access point (AP) or a non-access point (non-AP). DCF works well as long as the load is not too high. When the load is high, and in particular when the number of stations trying to access the wireless channel is large, channel access based on DCF does not work well. The reason for this is that there will be a high probability of collision on the channel, leading to poor channel usage.

A default channel access mechanism used in current WLAN systems is referred to as enhanced distributed channel access (EDCA), as specified in IEEE Standard for Information technology-Telecommunications and information exchange between systems Local and metropolitan area networks-Specific requirements - Part 11: Wireless LAN Medium Access Control (MAC) and Physical Layer (PHY) Specifications," in IEEE Std 802.11-2020 (Revision of IEEE Std 802.11-2016) , vol., no., pp.1-4379, 26 Feb. 2021, in the following denoted as "IEEE 802.11 Standard". In the EDCA mechanism, the STA accesses the channel using a set of channel access parameters based on a traffic class of the data. The wireless channel is obtained for a time duration denoted as TXOP (transmit opportunity), in which multiple frames of the same data class may be transmitted. The maximum size of a TXOP depends on the data type. A typical duration of a TXOP is in the range of a few milliseconds.

In the EDCA mechanism, four independent enhanced distributed channel access functions (EDCAFs) are involved to provide differentiated priorities to transmitted traffic, by using four different access categories (ACs) - voice (VO), video (VI), best effort (BE) and background (BK). The EDCA mechanism provides differentiated, distributed access to the wireless medium for contending STAs using eight different user priorities (UPs). Table 10-1 of the IEEE 802.11 Standard shows the mapping of different UPs to the four ACs. Figure 10-23 of the IEEE 802.11 Standard correspondingly illustrates a mapping of frame type or UP to different transmit queues corresponding to the four independent EDCAFs.

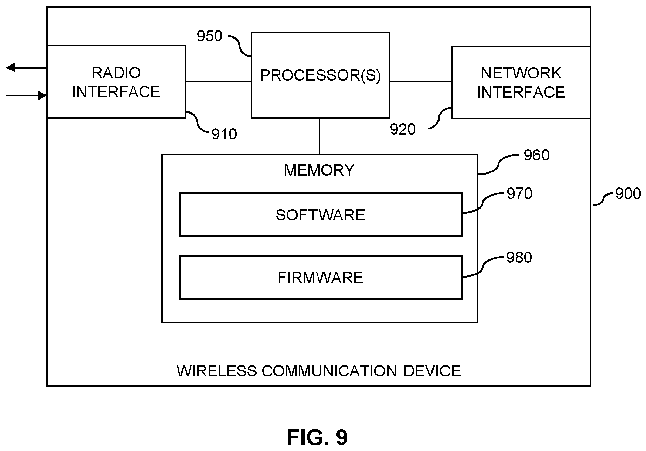

The AP can configure its associated non-AP STAs with EDCA parameters by transmitting a EDCA Parameter Set element in a management frame. The EDCA Parameter Set element provides information needed by the STAs for ensuring desired QoS levels of the traffic classes. Figure 9-293 of the IEEE 802.11 Standard illustrates the format of the EDCA Parameter Set element, and Figure 9-295 of the of IEEE 802.11 Standard shows the formats of AC_BE, AC_BK, AC_VI, and AC_VO Parameter Record fields of the EDCA Parameter Set element and defines that these Parameter Record fields also include an ACI/AIFSN field. The format of the ACI/AIFSN field is shown in Figure 9-296 of the IEEE 802.11 Standard and includes an AIFSN (arbitration inter-frame spacing number) subfield, an ACM (admission control mandatory) subfield, and an ACI (AC index) subfield. The ACI references the AC to which all parameters in this record correspond. The ACM (admission control mandatory) subfield indicates that admission control is required for the AC. If the ACM subfield is equal to 0, then there is no admission control for the corresponding AC. If the ACM subfield is set to 1, admission control has to be used prior to transmission using the access parameters specified for this AC. The AIFSN subfield indicates the number of slots after a SIFS (short interframe space) a STA defers before either invoking a backoff or starting a transmission. The minimum value of the AIFSN subfield is 2. The EDCA Parameter Set element can be used by the AP to establish policies, to change policies when accepting new STAs or new traffic, or to adapt to changes in offered load.

The IEEE 802.11 Standard also supports use of admission control to administer policies or regulate the available bandwidth resources. Admission control may for example be with aim of providing a guarantee of the amount of time that a STA has available to access and use the channel for transmissions. A hybrid coordination function (HCF) of the AP may be used to administer admission control in the network. The admission control mechanism typically depends on vendor implementation of the scheduler and may consider inputs like available channel capacity, link conditions, retransmission limits, and the scheduling requirements of a given stream when deciding on admission of a given stream.

An AP shall support admission control procedures at least to a minimal extent of advertising that admission is not mandatory on its ACs. As explained above, the AP may use the ACM subfields of the EDCA Parameter Set element to indicate whether admission control is required for each of the ACs. The ACM subfields are static for the duration of the lifetime of the AP's BSS (basic service set).

Traffic identifiers (TIDs) are identifiers usable by higher layer entities to distinguish MSDUs (MAC service data units) provided to MAC entities that support QoS within the MAC data service. There are 16 possible TID values; eight identify traffic categories (TCs), and the other eight identify parameterized traffic streams (TSs). The TID is assigned to an MSDU in the layers above the MAC layer. A TC is a label for MSDUs that have a distinct UP, from the perspective of higher layer entities, relative to other MSDUs provided for delivery over the same link. TCs are meaningful only to MAC entities that support QoS within the MAC data service. These MAC entities determine the UP for MSDUs belonging to a particular traffic category using the priority value provided with those MSDUs at the MAC service access point (MAC SAP). The eight TCs are mapped to UPs, and the UPs can be mapped to the four ACs as described above. The above-mentioned EDCA parameters are directly related to ACs and, as a consequence, also to the TIDs. As a result, any controlling action undertaken by an AP for a particular AC, such as EDCA parameter setting or admission control, indirectly also applies to the corresponding TIDs.

To improve channel usage, and in particular to allow for better support of a large number of devices, a more centralized channel access scheme may be utilized. Such centralized channel access may involve that rather than letting a STA attempt to access the channel whenever it has data to send, the channel access is controlled by the AP. A corresponding channel access scheme is for example supported in the IEEE 802.11ax technology, see IEEE 802.11ax-2021 - IEEE Standard for Information technology- Telecommunications and information exchange between systems Local and metropolitan area networks-Specific requirements Part 11: Wireless LAN Medium Access Control (MAC) and Physical Layer (PHY) Specifications Amendment 1: Enhancements for High Efficiency WLAN (19 May 2021), in the following denoted as "IEEE 802.11ax amendment" or High Efficiency (HE) amendment. The IEEE 802.11ax technology, or HE technology, for example supports orthogonal frequency division multiple access (OFDMA) in both downlink (DL), i.e., in a direction from the AP to the STA, and uplink (UL), i.e., in a direction from the STA to the AP. Also multi-user (MU) transmission in form of multi-user multiple input multiple output (MU-MIMO) is supported for both the DL and the UL. By supporting MU transmission and letting the AP control the channel access within a cell, efficient channel usage is achieved and one can avoid collisions arising due to contention in the BSS.

The OFDMA feature of the IEEE 802.11ax amendment also introduces scheduling capabilities of the AP. With OFDMA, contention within a BSS may be avoided, as the AP can be in charge of reserving the channel for both UL and DL transmissions. The AP can orchestrate UL OFDMA by using trigger frames (TFs) that are broadcasted to multiple STAs. The STAs reply simultaneously by transmitting UL trigger-based (TB) frames in OFDMA fashion. However, backward compatibility also allows HE APs or STAs to rather use the contention-based channel EDCA method if this is expected to perform better. Such selection between the different channel access methods applies to all transmissions between the AP and a given associated STA. An OM (Operating Mode) control field defined in the IEEE 802.11ax amendment allows STAs to indicate to the AP if they prefer to participate in TB UL OFDMA or rather rely on contention-based EDCA to deliver their UL data. STAs may change this indication at any time and as often as needed while they are associated to the AP. The OM control field includes subfields denoted as "UL MU Disable" and "UL MU Data Disable" which indicate whether UL TB transmissions are turned off or not. With setting "UL MU Disable" to "1", all TB transmissions are turned off. When setting "UL MU Data Disable" to "1", only transmissions of data via UL TB transmissions are turned off. This setting allows that the STAs can still can transmit MU-Block Acknowledgements in reply to a DL OFDMA transmission by the AP. The UL data would however be sent using the EDCA method.

An enhancement of the WLAN technology referred to as EHT (Extremely High Throughput), to be introduced with an amendment denoted as IEEE 802.11be, is planned to introduce a feature denoted as ML (multi-link). Corresponding functionalities are for example described in IEEE draft "IEEE P802.11be/D1.2", September 2021, in the following denoted as EHT draft. In ML, a device termed as multi-link device (MLD) has multiple affiliated stations (STAs), each of which can communicate using independent wireless channels, also referred to as links. Communication over multiple links by an MLD is termed as multi-link operation (MLO). For example, an MLD can have two affiliated STAs, one communicating using a channel in the 5 GHz frequency band and the other communicating using a channel in the 6 GHz frequency band. Alternatively, as another example, an MLD can have two affiliated STAs, communicating using different channels in the 6 GHz frequency band. An AP MLD corresponds to an MLD with two or more affiliated AP STAs. A non-AP MLD corresponds to an MLD with two or more affiliated non-AP STAs.

To further extend the TB scheduling capabilities, the EHT draft amendment also supports single user TB uplink transmissions. In this case, an AP can trigger a single STA to perform TB channel access and transmit a TB single user UL data frame.

The ML architecture of the EHT draft is based on having a single MAC-Service Access Point (MAC-SAP) for all links of the MLD and only one logical association between an AP and a non-AP STA. Accordingly, from the perspective of layers above the MAC layer, the MLD appears as a single device. This results in a set of MAC level functions being provided per link, such as construction of aggregated MAC PDUs, and another set of MAC level functions being provided per-MLD. These functionalities may also be regarded a lower MAC layer and upper MAC layer, respectively. The addressing in such architecture is implemented by providing separate MAC addresses per link, to address the respective endpoints of the links, and further separate MAC address per MLD, to address the MLD.

In Subclause 9.4.2.295d, the EHT draft also specifies a "TID-To-Link Mapping element". The TID-To-Link Mapping element indicates links on which frames belonging to each TID can be exchanged. The format of the TID-To-Link Mapping element is shown in Figure 9-788ead of the EHT draft. This format defines a field denoted as "TID-To-Link Mapping Control". The format of the TID-To-Link Mapping Control field is shown in Figure 9-788eae of the EHT draft. It includes a subfield denoted as "Direction", a subfield denoted as "Default Link Mapping", a reserved subfield, and a subfield denoted as "Link Mapping Presence Indicator". If the Direction subfield is set to "0", the TID-To-link Mapping element provides the TID-to-link mapping information for frames transmitted in the DL direction. If the Direction subfield is set to "1", the TID-To-Link Mapping element provides the TID-To-link mapping information for frames transmitted in the UL direction. If the Direction subfield is set to 2, the TID-To-Link Mapping element provides the TID-To-link mapping information for frames transmitted both in the DL direction and the UL direction. If the Default Link Mapping subfield is set to "1", the TID-To-Link Mapping element represents a default TID-to-link mapping. Otherwise, the Default Link Mapping subfield is set to "0". The Link Mapping Presence Indicator subfield indicates whether a field corresponding to the link mapping of TID "n" is present in the TID-To-Link Mapping element. A value of 1 in bit position n of the Link Mapping Presence Indicator subfield indicates that the field "Link Mapping Of TID n" is present in the TID-To-Link Mapping Element. Otherwise, the field "Link Mapping Of TID n" is not present in the TID-To-Link Mapping element. When the Default Link Mapping subfield is set to "1", the Link Mapping Presence Indicator is reserved.

The Link Mapping Of TID n field (where n = 0, 1, ... , 7) indicates the link(s) on which frames belonging to the TID n are allowed to be sent. A value of 1 in bit position i of the Link Mapping Of TID n field indicates that TID n is mapped to the link associated with the link ID i for the direction as specified in the Direction subfield. When the Default Link Mapping subfield is set to 1, this field is not present.

Potential enhancements to the TID-To-Link Mapping element are discussed in "TID to Link Mapping Enhancements" (https://mentor.ieee.org/802.11/dcn/21/11-21-1611-01-00be-tid-to-link-mapping-enhancements.pptx, September 2021). These enhancements have the purpose to further help the MLD AP and STAs agree on various kinds of TID-to-link mapping, thereby allowing to achieve some load balancing in the network, to reduce latency by assigning critical traffic TIDs to reserved channels, or to provide further tools for power saving.

Accordingly, there is a need for techniques which allow for improved handling of different classes of data traffic transmitted on one or more wireless links between devices of a wireless communication system.

### Summary

According to an embodiment, a method of controlling wireless transmissions in a wireless communication system is provided. According to the method, a wireless communication device configures at least one wireless channel for communication with a further wireless communication device. Further, the method involves that, individually for each of multiple classes of traffic to be transmitted on the at least one wireless channel, the wireless communication device selects between at least a first channel access method and a second channel access method.

According to a further embodiment, a wireless communication device for a wireless communication system is provided. The wireless communication device is adapted to configure at least one wireless channel for communication with a further wireless communication device. Further, the wireless communication device is adapted to, individually for each of multiple classes of traffic to be transmitted on the at least one wireless channel, select between at least a first channel access method and a second channel access method.

According to a further embodiment, a wireless communication device for a wireless communication system is provided. The wireless communication device comprises at least one processor and a memory. The memory contains instructions executable by said at least one processor, whereby the wireless communication device is operative to configure at least one wireless channel for communication with a further wireless communication device. Further, the memory contains instructions executable by said at least one processor, whereby the wireless communication device is operative to, individually for each of multiple classes of traffic to be transmitted on the at least one wireless channel, select between at least a first channel access method and a second channel access method.

According to a further embodiment, a computer program or computer program product is provided, e.g., in the form of a non-transitory storage medium, which comprises program code to be executed by at least one processor of a wireless communication device. Execution of the program code causes the wireless communication device to configure at least one wireless channel for communication with a further wireless communication device. Further, execution of the program code causes the wireless communication device to, individually for each of multiple classes of traffic to be transmitted on the at least one wireless channel, select between at least a first channel access method and a second channel access method.

Details of such embodiments and further embodiments will be apparent from the following detailed description.

### Brief Description of the Drawings

Fig. 1 schematically illustrates a wireless communication system according to an embodiment.
Fig. 2 schematically illustrates an example of a mapping of channel access methods to traffic classes and links, as used according to an embodiment.
Fig. 3 schematically illustrates an example of an extended TID-To-Link Mapping element according to an embodiment.
Fig. 4 schematically illustrates an example of a Channel Access element in the extended TID-To-Link Mapping element of Fig. 3.
Fig. 5 schematically illustrates an example of a Channel Access element in the extended TID-To-Link Mapping element of Fig. 3.
Fig. 6 schematically illustrates an example of processes according to an embodiment.
Fig. 7 shows a flowchart for schematically illustrating a method according to an embodiment.
Fig. 8 shows a block diagram for schematically illustrating functionalities of a wireless communication device according to an embodiment.
Fig. 9 schematically illustrates structures of a wireless communication device according to an embodiment.

### Detailed Description

In the following, concepts in accordance with exemplary embodiments of the disclosure will be explained in more detail and with reference to the accompanying drawings. The illustrated embodiments relate to controlling of wireless transmissions in a wireless communication system. The wireless communication system may be a WLAN (Wireless Local Area Network) system based on a IEEE 802.11 technology. However, it is noted that the illustrated concepts could also be applied to other wireless communication technologies, e.g., to contention-based modes of the LTE (Long Term Evolution) or NR (New Radio) technology specified by 3GPP (3^{rd} Generation Partnership Project). The illustrated concepts may be implemented by various types of wireless devices, in particular by APs and/or by non-AP STAs.

According to the illustrated concepts, wireless transmissions are performed on one or more wireless channels configured between wireless communication devices. These wireless channels are herein also denoted as links. The wireless communication devices may in particular correspond to an AP and a non-AP STA associated with the AP. In some scenarios, the AP is an MLD AP and/or the associated non-AP STA is an MLD non-AP STA. In other scenarios, the AP is a single-link AP and/or the associated non-AP STA is a single-link non-AP STA, i.e., at least one of the AP and associated STA can be a non MLD. In the illustrated concepts a wireless communication device, e.g., the AP or the associated non-AP STA, can transmit data of multiple traffic classes on at least one of the links. For each of the traffic classes, the wireless communication devices can individually select a channel access method for accessing the wireless channel. The channel access method can be selected from two or more available channel access methods. These channel access methods may specifically include a contention-based channel access method, such as the EDCA method of the IEEE 802.11 Standard, and a TB channel access method, such as the TB channel access of the IEEE 8021.11ax amendment. In some cases, further channel access methods may be considered in addition or as an alternative, e.g., a contention-free or controlled channel access method, such as the HCCA (Hybrid Coordination Function Controlled Channel Access) of the IEEE 802.11 Standard. The traffic classes may correspond to TIDs, and thus to TCs or TSs, and may each be mapped to a certain AC. The selected channel access method per traffic class may be signaled between the wireless communication devices. In particular, the AP could select the channel access method per traffic class and indicate the selection to its associated non-AP STA, e.g., in terms of a mapping of channel access method to TID. However, it would also be possible that, in addition or as an alternative, the non-AP STA selects the channel access method per traffic class and indicates the selection to its associated AP, e.g., in terms of a mapping of channel access method to TID. For MLD devices, such selection of channel access method per traffic class can be made individually for each link. In some scenarios, the selection by the AP and the selection by the non-AP STA could also be combined. In this case, the selection of channel access method per traffic class for a subset of one or more traffic classes and/or a subset of one or more links could be done by the AP, while for another subset of one or more traffic classes and/or another subset of one or more links the selection is done by the non-AP STA. Further, the selection may be made in a dynamic manner, e.g., by newly selecting the channel access method per traffic class depending on one or more conditions like traffic load, number of devices operating on the wireless channel, channel usage of the wireless channel, or the like.

In the illustrated concepts, an AP may thus configure a non-AP STA with the channel access method to be used for a specific TID. The mapping of the channel access method to the TID may be changed in a dynamic manner, e.g., be activated depending on thresholds or other conditions. The mapping can be temporary. In some cases, the mapping could also be non-mandatory, i.e., the non-AP STA could be allowed to override a mapping signaled by the AP. The channel access methods may include the EDCA method of the IEEE 802.11 Standard, the TB channel access method of the IEEE 802.11ax amendment, and/or the HCCA method of the IEEE 802.11 Standard. In some scenarios, also considering the HCCA method may help to achieve backward compatibility with deployments that require the use of the HCCA method on a certain band.

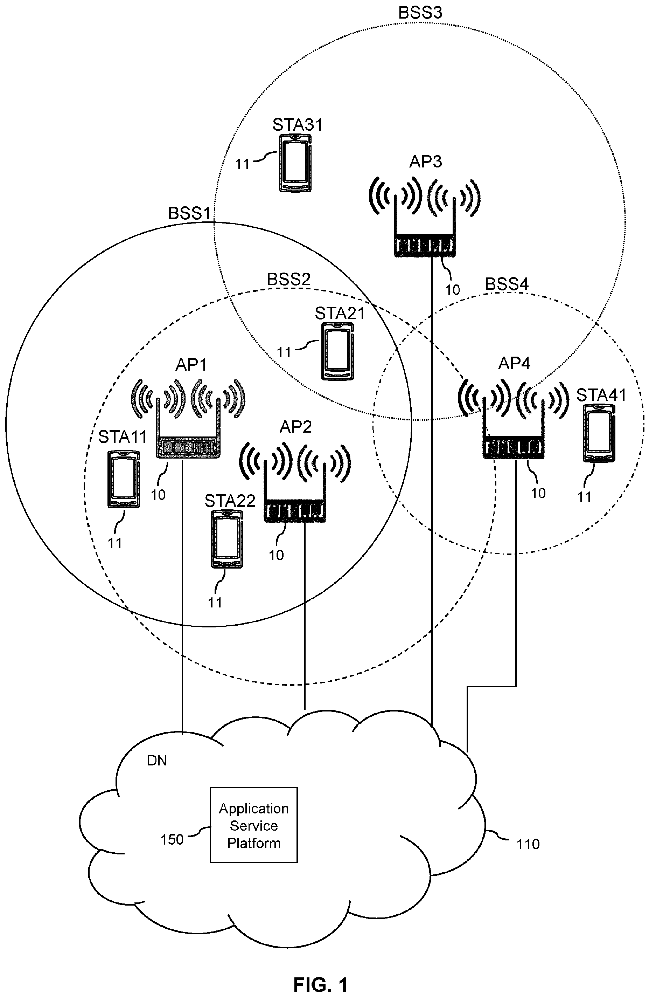

Fig. 1 illustrates an exemplary wireless communication system according to an embodiment. In the illustrated example, the wireless communication system includes multiple APs 10, in the illustrated example referred to as AP1, AP2, AP3, AP4, and multiple stations 11, in the illustrated example referred to as STA11, STA21, STA22, STA31, and STA41. STA11 is served by AP1 (in a first BSS denoted as BSS1), STA21 and STA22 are served by AP2 (in a second BSS denoted as BSS2), STA31 is served by AP3 (in a third BSS denoted as BSS3), and STA41 is served by AP4 (in a fourth BSS denoted as BSS4). The stations 11 may be non-AP STAs and correspond to various kinds of wireless devices, for example user terminals, such as mobile or stationary computing devices like smartphones, laptop computers, desktop computers, tablet computers, gaming devices, or the like. Further, the stations 11 could for example correspond to other kinds of equipment like smart home devices, printers, multimedia devices, data storage devices, or the like.

In the example of Fig. 1, each of the stations 11 may connect through a radio link to one of the APs 10. For example depending on location or channel conditions experienced by a given station 11, the station 11 may select an appropriate AP 10 and BSS for establishing the radio link. The radio link may be based on one or more OFDM carriers from a frequency spectrum which is shared on the basis of a contention based mechanism, e.g., a license-exempt band like the 2.4 GHz ISM band, the 5 GHz band, the 6 GHz band, or the 60 GHz band.

Each AP 10 may provide data connectivity of the stations 11 connected to the AP 10. As further illustrated, the APs 10 may be connected to a data network (DN) 110. In this way, the APs 10 may also provide data connectivity between stations 11 connected to different APs 10. Further, the APs 10 may also provide data connectivity of the stations 11 to other entities, e.g., to one or more servers, service providers, data sources, data sinks, user terminals, or the like. Accordingly, the radio link established between a given station 11 and its serving AP 10 may be used for providing various kinds of services to the station 11, e.g., a voice service, a multimedia service, or other data service. Such services may be based on applications which are executed on the station 11 and/or on a device linked to the station 11. By way of example, Fig. 1 illustrates an application service platform 150 provided in the DN 110. The application(s) executed on the station 11 and/or on one or more other devices linked to the station 11 may use the radio link for data communication with one or more other stations 11 and/or the application service platform 150, thereby enabling utilization of the corresponding service(s) at the station 11.

In a scenario as illustrated in Fig. 1, one or more of the APs 10 may use the per traffic class selection of the channel access method on one or more of the links in their BSS. In the following, corresponding examples will be further explained by first referring to scenarios in which the AP 10 is an AP MLD. Further, also at least some of the stations 11 in the BSS of the AP 10 could be non-AP MLDs. Accordingly, multiple links may be available for simultaneous use by the AP 10. These available links typically include one or more links for DL transmission and one or more links for UL transmission. In such scenarios, the AP 10 may select a set of one or more active links from the available links. For each active link, the AP 10 further selects the channel access method per traffic class, i.e., per TID. This selection may for example be done with the aim of optimizing latency of critical transmissions or total throughput across all links, depending on requirements of specific use cases. When making the selection, the AP 10 may distinguish between whether or not the respective station 11 supports the IEEE 802.11ax amendment. For example, if the station 11 operating on the considered link does not support the IEEE 802.11ax amendment, the AP 10 could refrain from selecting the TB channel access method of the IEEE 802.11ax amendment for this link. It is however noted that the illustrated concepts are not limited to MLO and could also be applied to single-link APs communication with single-link STAs. Further, it is noted that in some scenarios the per traffic class selection of the channel access method could also be coordinated among multiple APs, e.g., neighboring APs with overlapping BSS, like in the example of Fig. 1.

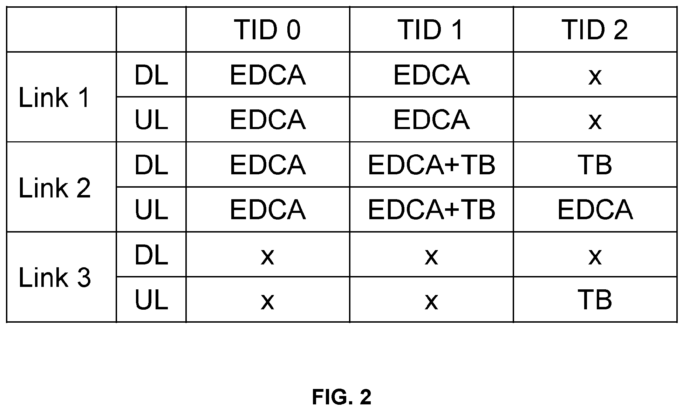

In some scenarios, the AP 10 may thus configure the channel access method per traffic class, e.g., TID, to be used on a specific active link of the AP 10. This may be achieved by configuring a mapping of channel access method to TID and link. The table of Fig. 2 shows an example of such mapping. As can be seen from the example of Fig. 2, the EDCA method is configured to TID 0 and TID 1 on link 1, both for DL and UL. No channel access method is configured for TID 2 on link 1, both for DL and UL. For link 2 in DL, the EDCA method is configured for TID 0, the EDCA method and the TB channel access method are configured for TID 1, and the TB channel access method is configured for TID 2. For link 2 in UL, the EDCA method is configured for TID 0, the EDCA method and the TB channel access method are configured for TID 1, and the EDCA method is configured for TID 2. For link 3 in DL, no channel access method is configured for any of TID 0, TID 1, and TID 2. For link 3 in UL, the TB channel access method is configured for TID 2. Here, it is noted that if two channel access methods are configured, like for TID 1 on link 2, usage of both channel access methods is allowed. If no channel access method is configured, like for TID 2 on link 1, the link may be considered as disabled for this TID.

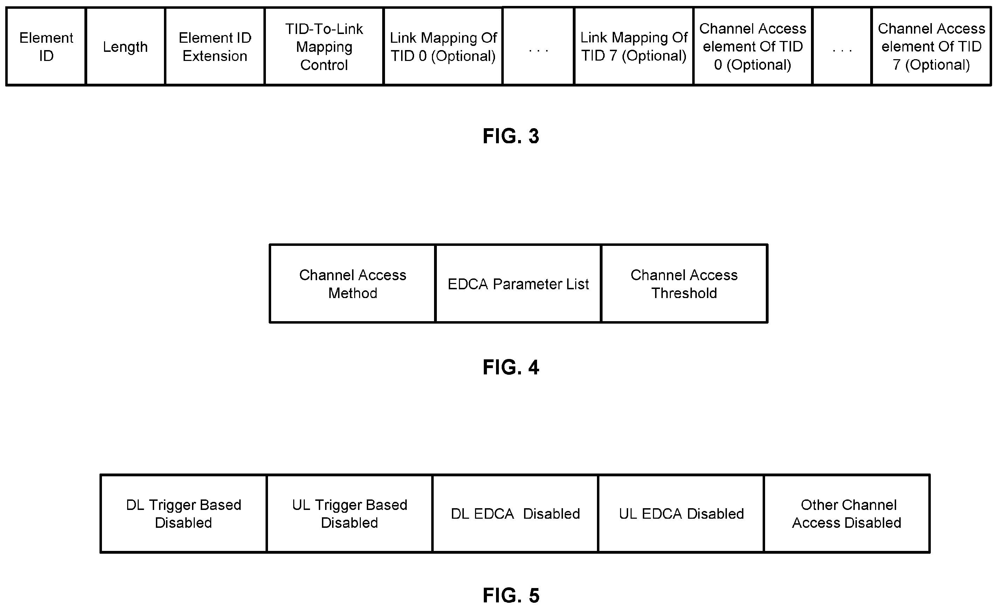

The AP 10 may signal the configuration of the channel access method per traffic class to its associated stations 11. This signaling can for example be based on an extended TID-To-Link-Mapping element which corresponds to the TID-To Link-Mapping element of the EHT draft and is extended to further indicate, for each of the TIDs, the channel access method to be applied for this TID. Fig. 3 illustrates an example format of such extended TID-To-Link-Mapping element. As can be seen, this format defines fields including an Element ID field, a Length field, an Element ID Extension field, a TID-To-Link Mapping Control field, and a Link Mapping field for each considered TID, corresponding to the fields of the TID-To Link-Mapping element of the EHT draft. In addition, the extended TID-To-Link-Mapping element includes a Channel Access element for each considered TID. The Channel Access element indicates the channel access method(s) configured for this TID. Figs. 4 and 5 illustrate examples of formats that can be used for the Channel Access elements.

In the example of Fig. 4, the format of the Channel Access element includes a Channel Access Method subfield, an EDCA Parameter List subfield, and a Channel Access Threshold subfield. The Channel Access Method field may identify the channel access method. For example, a value of "0" could identify the EDCA method, a value of "1" could identify the TB channel access method. The EDCA Parameter List subfield may include parameters of the EDCA method to be applied for the respective TID. These parameters may for example include an indication whether admission control is required, an AIFSN, a minimum contention window size, a maximum contention window size, and/or a maximum TXOP duration. The Channel Access Threshold field may indicate a threshold value to be used in deciding when the channel access method shall be activated, by comparing a certain metric to the threshold. The EDCA parameters may be specifically optimized in view of the requirements of the considered TID, possibly in relation to the EDCA parameter settings of one or more other TIDs. If for instance for the considered TID only TCP (Transmission Control Protocol) acknowledgements are expected to be transmitted, the EDCA parameters could be optimized for that use case.

Examples of thresholds that could be defined in the Channel Access Threshold subfield include a throughput threshold to be compared to throughput on the link. If the throughput on the link exceeds the threshold, the station 11 could switch from the EDCA method to the TB channel access method for the considered TID. An another example of such thresholds is a traffic load threshold, to be compared to a statistically observed traffic load of the station 11. If the observed traffic load exceeds the traffic load threshold, the station 11 could switch from EDCA to the TB channel access method for the considered TID. Another example of such thresholds is a queuing delay threshold, to be compared to the size or the head-of-line delay of a transmission queue corresponding to the considered TID. If the queuing delay exceeds a threshold before a trigger frame is received for triggering a transmission from the transmission queue, the station 11 could switch from the TB channel access method to the EDCA method.

In the example of Fig. 4, the format of the Channel Access element defines subfields for providing indications of disablement of one or more channel access methods for the considered TID. In the example of Fig. 4, these subfields include a DL Trigger Based Disabled subfield, to indicate whether, for the considered TID, the TB channel access method is disabled in DL. Further, the subfields include a UL Trigger Based Disabled subfield, to indicate whether, for the considered TID, the TB channel access method is disabled in UL. Further, the subfields include an DL EDCA Disabled subfield, to indicate whether, for the considered TID, the EDCA method is disabled in DL. Further, the subfields include a UL EDCA Disabled subfield, to indicate whether, for the considered TID, the EDCA method is disabled in UL. Further, the subfields include an Other Channel Access Disabled subfield, to indicate whether, for the considered TID, any other access method is disabled. It is noted that in some scenarios, the distinctions between DL and UL could be omitted from the disablement indications. Further, if all subfields are set to "disabled", this may be interpreted as an indication of disablement of the entire link.

In some scenarios, the signaled configuration of the channel access methods per traffic class may be temporary, i.e., apply only for a certain time period. During the configured time period, the configured channel access methods per traffic class are applied. After expiry of the time period, a previous or default configuration of the channel access methods may be reapplied.

In some scenarios, the signaled configuration of the channel access method per traffic class may be supplemented by an indication of one or more reasons, e.g., in terms of one or more corresponding reason codes. The reason could for example be a reason why the configuration is employed. An example of such reason could be optimization, e.g., of throughput, delay, power saving, and/or network performance. Corresponding reason codes could be: "OPTIMIZE", "OPTIMIZE_THROUGHPUT", "OPTIMIZE_DELAY", "OPTIMIZE_POWER_SAVINGS", or "OPTIMIZE_NETWORK_OPERATION". For example, the AP 10 could signal to the station 11 that it is attempting to optimize network performance by including the reason code "OPTIMIZE_NETWORK_OPERATION" in the TID-To-Link-Mapping element. The indication of reason(s) code could for instance be used for locally deciding on further optimizations and/or as a basis for negotiating the channel access method per traffic class.

The configuration of the channel access method per traffic class may be based on various criteria. For example, if the AP 10 configures the channel access method per traffic class, the AP may determine the configuration based on one or more of: an amount of data to be transmitted by the AP 10, an amount of data to be transmitted by the station 11, the TID of the data to be transmitted, the number of active devices on a certain wireless channel, channel usage of a certain wireless channel. Further, the configuration can be determined based on one or more thresholds, like the above-mentioned throughput threshold, traffic load threshold, or queuing delay threshold. Such threshold(s) may be set by the AP 10 and signaled to the station 11 in the Channel Access elements. Further, such thresholds may be locally applied by the AP 10 to decide on switching between channel access methods. The determination of the configuration can be based on various measurements performed by the AP 10, its associated station(s) 11 or other devices, e.g., other APs 10 or stations 11 associated with other APs 10.

In some scenarios, the determination of the configuration of the channel access method per traffic class can also be based on artificial intelligence (AI), e.g., on a machine learning (ML) model. For example, an ML model could be trained on the basis of training data including a training set of configurations of the channel access method per traffic class, associated input variables like amounts of data per traffic class to be transmitted and/or channel conditions, and associated data representing performance of the wireless communication system. Here, various kinds of performance metric could be used, e.g., overall throughput, average latency, or the like. The ML model could for example be based on reinforcement learning. However, other types of ML model could be used as well, e.g., based on supervised learning. The trained model could then be applied by the AP 10 or by the station 11 in determining the configuration of the channel access method per traffic class.

As an example, a situation may be assumed where the AP 10 and the station 11 operate on two links, e.g., one in the in the lower 6 GHz band and one in the upper 6 GHz band. Further, it is assumed that the AP 10 and the station 11 have two traffic streams with different requirements, e.g., in terms of latency. For example, the first traffic stream could correspond to best effort traffic for downlink downloads, and the second traffic stream could correspond to low latency traffic in downlink and uplink, e.g., related to gaming. The AP 10 could then configure the first traffic stream to be transmitted on the upper 6 GHz link, using the TB channel access method, and configure the second traffic stream to be transmitted on the lower 6 GHz link, using the EDCA method.

As an example, a situation may be assumed where the AP 10 and the station 11 operate on two links, e.g., one in the in the 6 GHz band and one 5 GHz band. Further, it is assumed that the AP 10 and the station 11 exchange traffic of a certain TID which is DL heavy, i.e., has significantly higher volume in DL than in UL. For example, the UL part of the traffic predominantly consist of TCP acknowledgements. Accordingly, the AP 10 could decide to configure the TID to only use the TB channel access method in UL on the 6 GHz link (i.e., to disable the EDCA method on the 6 GHz link) and to only use the EDCA method in UL on the 5 GHz link (i.e., to disable the TB channel access method on the 5 GHz link), such that the AP 10 can then undertake the DL transmissions without contending with the non-AP STAs on the 6 GHz link.

By disallowing the use of the TB channel access method in UL, while allowing use of the EDCA method for a certain TID the station 11 can be enabled to improve energy efficiency by better exploiting the possibilities of entering a sleep mode on that link. Since the timing of EDCA would be controlled by the station 11, the station 11 can enter a sleep mode an save energy while there are no UL data to be transmitted for this TID.

The above-mentioned signaled configuration of channel access method per traffic class can act as a command to apply the signaled configuration. However, in some scenarios, the signaled configuration could also act only as a recommendation. This means that the station 11 receiving the signaled configuration of channel access method per traffic is not barred from deviating from the signaled configuration. For example, if the signaled configuration indicates TB channel access for a certain TID and the station 11 has data to transmit, but does not receive a trigger frame within a given time limit, the station 11 could decide to still use the EDCA method for sending this data.

In the above examples, it was mostly assumed that the AP 10 decides on the configuration of channel access method per traffic class, and signals this configuration to the associated station(s) 11. However, in some scenarios it may also be beneficial it the station 11 can select the channel access method for at least some of the traffic classes. In this way, the channel access method per traffic class can be selected based on information which is only locally available at the station 11, which may enable a further optimized selection. This selection at the station 11 may be combined with the above-mentioned signaling of a configuration from the AP 10. For example, the station 11 may regard the signaled configuration as a recommendation and use this recommendation as a basis for making a local selection of the channel access method for at least some of the traffic classes. In some cases, the station 11 may decide to accept the recommendation. In some cases, the station may deviate from the recommendation and may then also inform the AP 10 about the deviation, e.g., by signaling a modified configuration of channel access method per traffic class to the AP 10. This signaling may be similar to the signaling of the configuration from the AP 10 to the station 11, e.g., by also using the extended TID-To-Link-Mapping element of Fig. 3 and Channel Access elements as explained in connection with Fig. 4 or 5. Accordingly, the station 11 could also indicate parameters for the channel access method configured per traffic class, e.g., EDCA parameters, or thresholds for activating the channel access method per traffic class. In some cases, the final selection of the configuration of channel access method per traffic class may also be based on negotiation between the AP 10 and the station 11. Such negotiation may involve an exchange of two or more signaling messages between the AP 10 and the station 11. Each of these messages may be based on the extended TID-To-Link-Mapping element of Fig. 3 and Channel Access elements as explained in connection with Fig. 4 or 5.

As mentioned above, the configuration of channel access method per traffic class could also be beneficial when operating only on a single link, e.g., for communication between a non-MLD AP and a non-MLD STA. For example, when assuming that an AP 10 and its associated station 11 are both non-MLD, and have two traffic streams, one corresponding to non-critical traffic with TID 0 and the other to latency-sensitive traffic with TID 7, in both DL and UL, the AP 10 could select different access methods for these two TIDs. For example, the AP 10 could select the TB channel access method for TID 7, to ensure that the data of TID 7 are transmitted in a well-controlled timely manner. As compared to that, the AP 10 could select the EDCA method for TID 0, optionally with modified parameters so that the non-critical traffic is sent when the channel access is gained via a penalized EDCA mode. It would also be possible to configure the EDCA method for a high priority TID under the condition that the load on the wireless channel is low, e.g., by configuring the above-mentioned traffic load threshold. This may be beneficial because the EDCA method can achieve high performance under conditions of low load. On the other hand, only the TB access method could be allowed for TIDs with low priority. When deciding on such configuration excluding the EDCA method, the AP 10 may also take into account that certain legacy STAs, that do not support the IEEE 802.11ax amendment, cannot use the TB channel access method. So if such stations 11 are present in the BSS of the AP 10, which could be the case in the 2.4 GHz and 5 GHz bands, the AP 10 may decide to refrain from completely disallowing the EDCA method.

As already mentioned above, the configuration of channel access method per traffic class could also be coordinated among multiple APs, e.g. neighboring APs with overlapping BSSs. Such coordination can be achieved through a network controller or over-the-air (OTA). When for example considering the APs 10 of Fig. 1, AP1 and AP2 each serve one or more associated stations 11 in their respective BSS, namely STA11, STA21, and STA22, and the BSSs of AP1 and AP2 have significant overlap. When further assuming that each these devices is an MLD, they would for example be capable of operating concurrently on a first wireless channel in the 5 GHz band and a second wireless channel in the 6 GHz band. The coordination could then for example involve enforcing or suggesting that, for the same wireless channel, the APs also use the same configuration of channel access method per traffic class. For example, both AP1 and AP2, as well as their respective associated stations, could use the EDCA method on the first wireless channel and the TB channel access method on the second wireless channel, with the same TID-To-Link mapping being applied by both APs, e.g., TID 0-5 mapped to the first wireless channel and TID 6-7 mapped to the second wireless channel. It is however noted that in some cases the coordination could also involve only partial alignment of the configurations of channel access method per traffic class between the coordinated APs, e.g., an alignment for only a subset of the active links or for only some of the considered traffic classes.

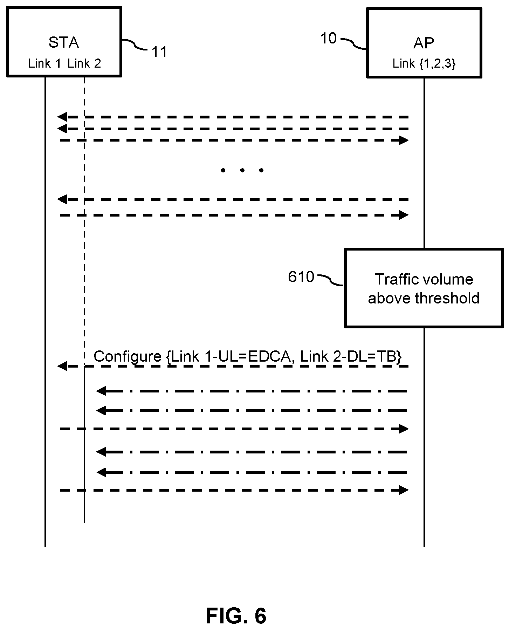

Fig. 6 shows an example of processes which are based on the concept as illustrated above. The processes of this example involve an AP 10, e.g., corresponding to any of the APs 10 illustrated in Fig. 1, and a STA 11 associated with the AP 10. The AP 10 is assumed to be an MLD AP, with three links, denoted as Link 1, Link 2, and Link 3, being available to the AP 10. Similarly, the and the STA 11 is assumed to be an MLD STA, with Link 1 and Link 2 being available for communication with the AP 10. In Fig. 6, wireless transmissions between the AP 10 and the STA 11 are illustrated by horizontal arrows, and different kinds of broken arrows indicate different channel access methods used in the wireless transmissions.

Initially, the AP 10 sends DL wireless transmissions based on the EDCA method on Link 1 to the STA 11. The STA 11 sends UL wireless transmissions based on the EDCA method on Link 1 to the AP 10. At some point, as illustrated by block 610, AP 10 determines that the traffic volume to be transmitted to the STA 11 exceeds a threshold, e.g., due to a large volume download initiated by the STA 11. Accordingly, the AP 10 decides to activate Link 2, to be used for the transmission of the best effort DL data of the download and to configure the TB channel access method for the TID corresponding to the best effort data. Further, the AP 10 decides to configure the EDCA method for other latency-sensitive UL data on Link 1. The AP 10 signals this configuration to the STA 11, which then activates Link 2 for receiving the best effort DL data from the AP 10 and uses Link 1 with the EDCA method to send the latency-sensitive UL data. Here, it is noted that for the EDCA method used for the latency-sensitive UL data on Link 1 the parameter settings could be modified as compared to the previous configuration, to thereby better accommodate the requirements of the latency-sensitive UL data.

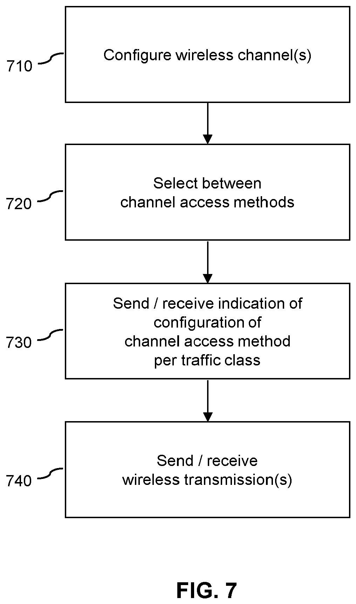

Fig. 7 shows a flowchart for illustrating a method, which may be utilized for implementing the illustrated concepts. The method of Fig. 7 may be used for implementing the illustrated concepts in a wireless communication device. The wireless communication device may be an AP, e.g., one of the above-mentioned APs 10. Alternatively, the wireless communication device may be a non-AP STA, such as one of the above-mentioned stations 11. The wireless communication system may be based on a wireless local area network, WLAN, technology, e.g., according to the IEEE 802.11 standards family. The wireless communication device may be an MLD or a non-MLD.

If a processor-based implementation of the wireless communication device is used, at least some of the steps of the method of Fig. 7 may be performed and/or controlled by one or more processors of the wireless communication device. Such wireless communication device may also include a memory storing program code for implementing at least some of the below described functionalities or steps of the method of Fig. 7.

At step 710, the wireless communication device configures at least one wireless channel for communication with a further wireless communication device. If the wireless communication device is an AP, the further wireless communication device can be a non-AP STA associated to the AP, e.g., one of the above-mentioned stations 11. If the wireless communication device is a non-AP STA, the further wireless communication device can be an AP to which the wireless communication device is associated, e.g., one of the above-mentioned APs 10. In some scenarios, the wireless communication device may also configure multiple wireless channels for communication with a further wireless communication device, i.e., at least a first wireless channel and a second wireless channel.

At step 720, the wireless communication device selects between at least a first channel access method and a second channel access method. This selection is accomplished individually for each of multiple classes of traffic to be transmitted on the at least one wireless channel.

In scenarios where the wireless communication device configures at least a first wireless channel and a second wireless channel for communication with the further wireless communication device, step 720 may involve that, individually for each of multiple classes of traffic to be transmitted on the first wireless channel, the wireless communication device selects between at least the first channel access method and the second channel access method. Further, step 720 may then involve that, individually for each of multiple classes of traffic to be transmitted on the second wireless channel, the wireless communication device selects between at least the first channel access method and the second channel access method.

The classes of traffic may correspond to the above-mentioned traffic classes. The classes of traffic may each be identified by a TID. Selecting between at least the first channel access method and the second channel access method is based on one or more mappings of one of at least the first channel access method and the second channel access method to the TIDs. The mapping may be defined individually for each wireless channel. Accordingly, in a scenario where the wireless communication device configures at least a first wireless channel and a second wireless channel for communication with the further wireless communication device, for the first wireless channel the selection between at least the first channel access method and the second channel access method can be based on a first mapping of one of at least the first channel access method and the second channel access method to the TIDs, and for the second wireless channel the selection between at least the first channel access method and the second channel access method is based on a second mapping of one of at least the first channel access method or the second channel access method to the TIDs. The second mapping can be different from the first mapping. An example of such link-dependent mapping is illustrated by the table of Fig. 2.

For at least one of the classes of traffic, the selection of step 720 may be based on one or more conditions related to the at least one wireless channel. Based on such conditions, the wireless communication device newly may also newly select between at least the first channel access method and the second channel access method for at least one of the classes of traffic.

The one or more conditions may include or be based on an amount of data to be transmitted by the wireless communication device, an amount of data to be transmitted by the further wireless communication device, one or more TIDs associated with data to be transmitted by the wireless communication device, one or more TIDs associated with data to be transmitted by the further wireless communication device, one or more QoS parameters associated with data to be transmitted by the wireless communication device, one or more QoS parameters associated with data to be transmitted by the further wireless communication device, a number of wireless communication devices operating on the same wireless channel, and/or a channel usage value of the wireless channel. At least one of the one or more conditions may be based on measurements reported by the further wireless communication device and/or on measurements reported by one or more other wireless communication devices.

In some scenarios, a ML model may be utilized for the selection of step 720. In particular, for at least one of the classes of traffic, the selection between at least the first channel access method and the second channel access method is based on a machine learning model. The ML model may be trained on the basis of training data comprising data indicating selections between at least the first channel access method and the second channel access method and related data representing performance of the wireless communication system.

For at least one of the classes of traffic, the selection of step 720 may also be coordinated with other wireless communication devices with one or more other wireless communication devices operating on the same wireless channel. For example, if the wireless communication device is an AP, the selection may be coordinated with one or more other APs, e.g., one or more neighboring APs having a service area, e.g., BSS, which overlaps with the service area, e.g., BSS of the wireless communication device.

The first channel access method may correspond to a contention-based channel access method, such as the EDCA method of the IEEE 802.11 Standard. The second channel access method may correspond to a TB channel access method of the IEEE 802.11ax amendment. In some scenarios, the selection of step 720 could be between the first channel access method, the second channel access method and a third channel access method. The third channel access method could be a contention-free channel access method, such as the HCCA method of the IEEE 802.11 Standard.

At step 730, at least one of the one or more mappings of step 720 may be signaled between the wireless communication device and the further wireless communication device. This may for example involve that the wireless communication device sends an indication of the at least one of the one or more mappings to the further wireless communication device. Alternatively or in addition, this may involve that the wireless communication device receives an indication of the at least one of the one or more mappings from the further wireless communication device. The indications may be based on the extended TID-To-Link-Mapping element of Fig. 3 and Channel Access elements as explained in connection with Fig. 4 or 5.

At step 740, the wireless communication device may receive and/or send one or more wireless transmissions based on the channel access methods selected at step 720. When sending a wireless transmission to the further wireless communication device, this may for example involve accessing the wireless channel based on the selected channel access method. When receiving a wireless transmission from the further wireless communication device, this may involve being prepared to receive the wireless transmission when the further wireless communication device accesses the wireless channel based on the selected channel access method. In some cases, like for the TB channel access method, this may also involve assisting the further wireless communication device in accessing the channel by providing control information, such as a trigger frame.

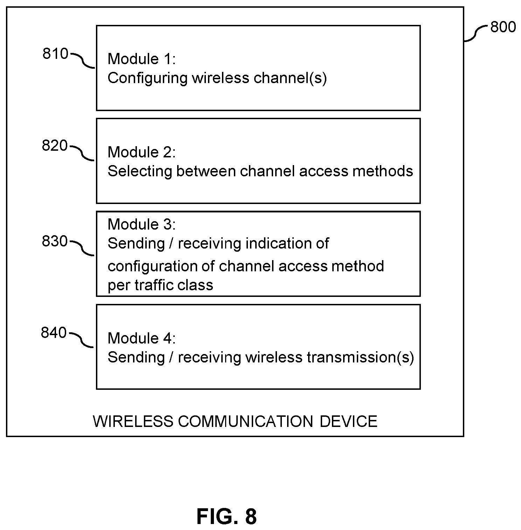

Fig. 8 shows a block diagram for illustrating functionalities of a wireless communication device 800 which operates according to the method of Fig. 7. The wireless communication device 800 may for example correspond to one of above-mentioned APs 10 or to one of the above-mentioned stations 11. As illustrated, the wireless communication device 800 may be provided with a module 810 configured to configure a wireless channel for communication with a further wireless communication device, such as explained in connection with step 710. Further, the wireless communication device 800 may be configured with a module 820 configured to select between channel access methods, such as explained in connection with step 720. Further, the wireless communication device 800 may be provided with a module 830 configured to send and/or receive one or more indications of mappings, such as explained in connection with step 730. Further, the wireless communication device 800 may be provided with a module 840 configured to send and/or receive one or more wireless transmissions, such as explained in connection with step 740.

It is noted that the wireless communication device 800 may include further modules for implementing other functionalities, such as known functionalities of an AP or non-AP STA in an IEEE 802.11 technology. Further, it is noted that the modules of the wireless communication device 800 do not necessarily represent a hardware structure of the wireless communication device 800, but may also correspond to functional elements, e.g., implemented by hardware, software, or a combination thereof.

Fig. 9 illustrates a processor-based implementation of a wireless communication device 900. The structures as illustrated in Fig. 9 may be used for implementing the above-described concepts. The wireless communication device 900 may for example correspond to one of above-mentioned APs 10 or to one of the above-mentioned stations 11.

As illustrated, the wireless communication device 900 includes a radio interface 910. The radio interface 910 may for example be based on a WLAN technology, e.g., according to an IEEE 802.11 family standard. However, other wireless technologies could be supported as well, e.g., the LTE technology or the NR technology. In some cases, the radio interface may comprise multiple transmit and receive processing chains, e.g., in order to support MLO. In some scenarios, the radio interface 910 may be based on multiple antennas of the wireless communication device 900 and support beamformed multi-antenna port transmission to enable spatial multiplexing of wireless transmissions, i.e., usage of multiple spatial streams. Further, if the wireless communication device 900 is an AP, it may be provided with a network interface 920 for connecting to a data network, e.g., using a wire-based connection.

Further, the wireless communication device 900 may include one or more processors 950 coupled to the interface(s) 910, 920 and a memory 960 coupled to the processor(s) 950. By way of example, the interface(s) 910, 920, the processor(s) 950, and the memory 960 could be coupled by one or more internal bus systems of the wireless communication device 900. The memory 960 may include a Read-Only-Memory (ROM), e.g., a flash ROM, a Random Access Memory (RAM), e.g., a Dynamic RAM (DRAM) or Static RAM (SRAM), a mass storage, e.g., a hard disk or solid state disk, or the like. As illustrated, the memory 960 may include software 970 and/or firmware 980. The memory 960 may include suitably configured program code to be executed by the processor(s) 950 so as to implement the above-described functionalities for controlling wireless transmissions, such as explained in connection with Fig. 7.

It is to be understood that the structures as illustrated in Fig. 9 are merely schematic and that the wireless communication device 900 may actually include further components which, for the sake of clarity, have not been illustrated, e.g., further interfaces or further processors. Also, it is to be understood that the memory 960 may include further program code for implementing known functionalities of an AP or non-AP STA in an IEEE 802.11 technology. According to some embodiments, also a computer program may be provided for implementing functionalities of the wireless communication device 900, e.g., in the form of a physical medium storing the program code and/or other data to be stored in the memory 960 or by making the program code available for download or by streaming.

As can be seen, the concepts as described above may be used for efficiently controlling wireless transmissions. When transmitting data with different ACs may be transmitted over different links, the concepts may be used to better take into account that existing QoS mechanisms of the WLAN technology only statistically prioritizes one AC over another. Further, since lower priority ACs may be transmitted on a dedicated wireless channel, a need to select particularly penalizing channel access parameters for lower priority ACs may be relaxed. This can result in a better system performance, both for critical and background traffic. In the illustrated concepts, it is also possible to separate STAs having different capabilities concerning supported channel access methods, e.g., to separate STAs supporting the TB channel access method of the IEEE 8021.11ax amendment from other devices, e.g., devices supporting only older legacy channel access methods like the EDCA method. For example, a dedicated wireless channel could be allocated for each of the two categories, and different channel access method could be allocated depending on the category of the devices.

It is to be understood that the examples and embodiments as explained above are merely illustrative and susceptible to various modifications. For example, the illustrated concepts are not limited with respect to the number of parallel incoming and outgoing wireless transmissions. Further, the illustrated concepts may be applied in connection with various kinds of wireless technologies, without limitation to WLAN technologies. Further, the concepts may be applied with respect to various types of APs and STAs. Moreover, it is to be understood that the above concepts may be implemented by using correspondingly designed software to be executed by one or more processors of an existing device or apparatus, or by using dedicated device hardware. Further, it should be noted that the illustrated apparatuses or devices may each be implemented as a single device or as a system of multiple interacting devices or modules.

## Claims

1. A method of controlling wireless transmissions in a wireless communication system, the method comprising:
a wireless communication device (10, 11; 800; 900) configuring at least one wireless channel for communication with a further wireless communication device (10, 11; 800; 900); and
individually for each of multiple classes of traffic to be transmitted on the at least one wireless channel, the wireless communication device (10, 11; 800; 900) selecting between at least a first channel access method and a second channel access method,
wherein each class of traffic is identified by a corresponding traffic identifier, and
wherein selecting between at least the first channel access method and the second channel access method is based on one or more mappings of one of at least the first channel access method and the second channel access method to the traffic identifiers, and
wherein the wireless communication device sends an indication of the one or more mappings to the further wireless communication device (10, 11; 800; 900) or receives an indication of the one or more mappings from the further wireless communication device (10, 11; 800; 900).

2. The method according to claim 1, comprising:
the wireless communication device (10, 11; 800; 900) configuring at least a first wireless channel and a second wireless channel for communication with the further wireless communication device (10, 11; 800; 900);
individually for each of multiple classes of traffic to be transmitted on the first wireless channel, the wireless communication device (10, 11; 800; 900) selecting between at least the first channel access method and the second channel access method; and
individually for each of multiple classes of traffic to be transmitted on the second wireless channel, the wireless communication device (10, 11; 800; 900) selecting between at least the first channel access method and the second channel access method.

3. The method according to claim 2,
wherein for the first wireless channel selecting between at least the first channel access method and the second channel access method is based on a first mapping of one of at least the first channel access method and the second channel access method to the traffic identifiers, and
wherein for the second wireless channel selecting between at least the first channel access method and the second channel access method is based on a second mapping of one of at least the first channel access method or the second channel access method to the traffic identifiers.

4. The method according to claim 3,
wherein the second mapping is different from the first mapping.

5. The method according to any one of the preceding claims, comprising:
for at least one of the classes of traffic and based on one or more conditions related to the at least one wireless channel, the wireless communication device (10, 11; 800; 900) newly selecting between at least the first channel access method and the second channel access method.

6. The method according to claim 5,
wherein the one or more conditions comprise an amount of data to be transmitted by the wireless communication device (10, 11; 800; 900), an amount of data to be transmitted by the further wireless communication device (10, 11; 800; 900), one or more traffic identifiers associated with data to be transmitted by the wireless communication device (10, 11; 800; 900), one or more traffic identifiers associated with data to be transmitted by the further wireless communication device (10, 11; 800; 900), one or more quality of service parameters associated with data to be transmitted by the wireless communication device (10, 11; 800; 900), one or more quality of service parameters associated with data to be transmitted by the further wireless communication device (10, 11; 800; 900), a number of wireless communication devices (10, 11; 800; 900) operating on the same wireless channel, and/or a channel usage value of the wireless channel.

7. The method according to claim 5 or 6,
wherein at least one of the one or more conditions is based on measurements reported by the further wireless communication device (10, 11; 800; 900) and/or on measurements reported by one or more other wireless communication devices (10, 11; 800; 900).

8. The method according to any one of the preceding claims,
wherein for at least one of the classes of traffic, selecting between at least the first channel access method and the second channel access method is based on a machine learning model.

9. The method according to claim 8,
wherein the machine learning model is trained on the basis of training data comprising data indicating selections between at least the first channel access method and the second channel access method and related data representing performance of the wireless communication system.

10. The method according to any one of the preceding claims,
wherein for at least one of the classes of traffic, selecting between at least the first channel access method and the second channel access method is coordinated with one or more other wireless communication devices (10, 11; 800; 900) operating on the same wireless channel.

11. The method according to any one of the preceding claims,
wherein the first channel access method corresponds to a contention-based channel access method and the second channel access method corresponds to a trigger-based channel access method.

12. The method according to any one of the preceding claims,
wherein said selecting is between the first channel access method, the second channel access method and a third channel access method.

13. The method according any one of the preceding claims,
wherein the third channel access method corresponds to a contention-free channel access method.

14. The method according to any one of the preceding claims,
wherein the wireless communication device (10, 11; 800; 900) is an access point and the further wireless communication device (10, 11; 800; 900) is a station associated with the access point.

15. The method according to any one of claims 1 to 13,
wherein the further wireless communication device (10, 11; 800; 900) is an access point and the wireless communication device (10, 11; 800; 900) is a station associated with the access point.

16. The method according to any one of the preceding claims,
wherein the wireless communication system is based on a Wireless Local Area Network technology according to the IEEE 802.11 standards family.

17. A wireless communication device (10, 11; 800; 900) for a wireless communication system, the wireless communication device (10, 11; 800; 900) being adapted to:
configure at least one wireless channel for communication with a further wireless communication device (10, 11; 800; 900); and
individually for each of multiple classes of traffic to be transmitted on the at least one wireless channel, select between at least a first channel access method and a second channel access method,
wherein each class of traffic is identified by a corresponding traffic identifier, and
wherein selecting between at least the first channel access method and the second channel access method is based on one or more mappings of one of at least the first channel access method and the second channel access method to the traffic identifiers, and
wherein the wireless communication device is adapted to send an indication of the one or more mappings to the further wireless communication device (10, 11; 800; 900) or to receive an indication of the one or more mappings from the further wireless communication device (10, 11; 800; 900).

18. The wireless communication device (10, 11; 800; 900) according to claim 17,
wherein the wireless communication device (10, 11; 800; 900) is configured to perform a method according to any one of claims 2 to 16.

19. The wireless communication device (10, 11; 800; 900) according to claim 17 or 18, comprising:
at least one processor (950), and
a memory (960) containing program code executable by the at least one processor,
whereby execution of the program code by the at least one processor (950) causes the wireless communication device (10, 11; 800; 900) to perform a method according to any one of claims 1 to 16.

20. A computer program or computer program product comprising program code to be executed by at least one processor (950) of a wireless communication device (10, 11; 800; 900), whereby execution of the program code causes the wireless communication device (10, 11; 800; 900) to perform a method according to any one of claims 1 to 16.

## Patentansprüche

1. Verfahren zur Steuerung von Drahtlosübertragungen in einem Drahtloskommunikationssystem, wobei das Verfahren umfasst, dass:
eine drahtlose Kommunikationsvorrichtung (10, 11; 800; 900) mindestens einen Drahtloskanal zur Kommunikation mit einer weiteren drahtlosen Kommunikationsvorrichtung (10, 11; 800; 900) konfiguriert; und
die drahtlose Kommunikationsvorrichtung (10, 11; 800; 900) für jede von mehreren Klassen von Verkehr, der auf dem mindestens einen Drahtloskanal übertragen werden soll, individuell zwischen mindestens einem ersten Kanalzugriffsverfahren und einem zweiten Kanalzugriffsverfahren auswählt,
wobei jede Verkehrsklasse durch eine entsprechende Verkehrskennung identifiziert wird, und
wobei das Auswählen zwischen mindestens dem ersten Kanalzugriffsverfahren und dem zweiten Kanalzugriffsverfahren auf einer oder mehreren Zuordnungen eines von mindestens dem ersten Kanalzugriffsverfahren und dem zweiten Kanalzugriffsverfahren zu Verkehrskennungen basiert, und
wobei die drahtlose Kommunikationsvorrichtung eine Anzeige der einen oder der mehreren Zuordnungen an die weitere drahtlose Kommunikationsvorrichtung (10, 11; 800; 900) sendet oder eine Anzeige der einen oder der mehreren Zuordnungen von der weiteren drahtlosen Kommunikationsvorrichtung (10, 11; 800; 900) empfängt.

2. Verfahren nach Anspruch 1, umfassend, dass:
die drahtlose Kommunikationsvorrichtung (10, 11; 800; 900) mindestens einen ersten Drahtloskanal und einen zweiten Drahtloskanal zur Kommunikation mit der weiteren drahtlosen Kommunikationsvorrichtung (10, 11; 800; 900) konfiguriert;
die drahtlose Kommunikationsvorrichtung (10, 11; 800; 900) für jede von mehreren Klassen von Verkehr, der auf dem ersten Drahtloskanal übertragen werden soll, individuell zwischen mindestens dem ersten Kanalzugriffsverfahren und dem zweiten Kanalzugriffsverfahren auswählt, und
die drahtlose Kommunikationsvorrichtung (10, 11; 800;
900) für jede von mehreren Klassen von Verkehr, der auf dem zweiten Drahtloskanal übertragen werden soll, individuell zwischen mindestens dem ersten Kanalzugriffsverfahren und dem zweiten Kanalzugriffsverfahren auswählt.

3. Verfahren nach Anspruch 2,
wobei für den ersten Drahtloskanal das Auswählen zwischen mindestens dem ersten Kanalzugriffsverfahren und dem zweiten Kanalzugriffsverfahren auf einer ersten Zuordnung eines von mindestens dem ersten Kanalzugriffsverfahren und dem zweiten Kanalzugriffsverfahren zu den Verkehrskennungen basiert, und
wobei für den zweiten Drahtloskanal das Auswählen zwischen mindestens dem ersten Kanalzugriffsverfahren und dem zweiten Kanalzugriffsverfahren auf einer zweiten Zuordnung eines von mindestens dem ersten Kanalzugriffsverfahren und dem zweiten Kanalzugriffsverfahren zu Verkehrskennungen basiert.

4. Verfahren nach Anspruch 3,
wobei die zweite Zuordnung von der ersten Zuordnung verschieden ist.

5. Verfahren nach einem der vorhergehenden Ansprüche, umfassend, dass:
die drahtlose Kommunikationsvorrichtung (10, 11; 800; 900) für mindestens eine der Verkehrsklassen und basierend auf einer oder mehreren Bedingungen in Bezug auf den mindestens einen Drahtloskanal neu zwischen mindestens dem ersten Kanalzugriffsverfahren und dem zweiten Kanalzugriffsverfahren auswählt.

6. Verfahren nach Anspruch 5,
wobei die eine oder mehreren Bedingungen eine von der drahtlosen Kommunikationsvorrichtung (10, 11; 800; 900) zu übertragende Datenmenge, eine von der weiten drahtlosen Kommunikationsvorrichtung (10, 11; 800; 900) zu übertragende Datenmenge, eine oder mehrere Verkehrskennungen, die mit Daten assoziiert sind, die von der drahtlosen Kommunikationsvorrichtung (10, 11; 800; 900) übertragen werden sollen, eine oder mehrere Verkehrskennungen, die mit Daten assoziiert sind, die von der weiteren drahtlosen Kommunikationsvorrichtung (10, 11; 800; 900) übertragen werden sollen, einen oder mehrere Dienstqualitätsparameter, die mit Daten assoziiert sind, die von der drahtlosen Kommunikationsvorrichtung (10, 11; 800; 900) übertragen werden sollen, einen oder mehrere Dienstqualitätsparameter, die mit Daten assoziiert sind, die von der weiteren drahtlosen Kommunikationsvorrichtung (10, 11; 800; 900) übertragen werden sollen, eine Anzahl von drahtlosen Kommunikationsvorrichtungen (10, 11; 800; 900), die auf demselben Drahtloskanal operiert, und einen Kanalnutzungswert des Drahtloskanals umfassen.

7. Verfahren nach Anspruch 5 oder 6,
wobei mindestens eine der einen oder der mehreren Bedingungen auf Messungen, die von der weiteren drahtlosen Kommunikationsvorrichtung (10, 11; 800; 900) meldet werden, und/oder Messungen basiert, die von einer oder mehreren anderen drahtlosen Kommunikationsvorrichtungen (10, 11; 800; 900) gemeldet werden.

8. Verfahren nach einem der vorhergehenden Ansprüche,
wobei für mindestens eine der Verkehrsklassen das Auswählen zwischen mindestens dem ersten Kanalzugriffsverfahren und dem zweiten Kanalzugriffsverfahren auf einem Modell für maschinelles Lernen basiert.

9. Verfahren nach Anspruch 8,
wobei das Modell für maschinelles Lernen auf der Basis von Trainingsdaten trainiert wird, die Daten, die Auswahlen zwischen mindestens dem ersten Kanalzugriffsverfahren und dem zweiten Kanalzugriffsverfahren anzeigen, und damit in Beziehung stehende Daten umfassen, die die Leistungsfähigkeit des Drahtloskommunikationssystems darstellen.

10. Verfahren nach einem der vorhergehenden Ansprüche,
wobei für mindestens eine der Verkehrsklassen das Auswählen zwischen mindestens dem ersten Kanalzugriffsverfahren und dem zweiten Kanalzugriffsverfahren mit einer oder mehreren anderen drahtlosen Kommunikationsvorrichtungen (10, 11; 800; 900) koordiniert wird, die auf demselben Drahtloskanal operieren.

11. Verfahren nach einem der vorhergehenden Ansprüche,
wobei das erste Kanalzugriffsverfahren einem konfliktbasierten Kanalzugriffsverfahren entspricht und das zweite Kanalzugriffsverfahren einem auslöserbasierten Kanalzugriffsverfahren entspricht.

12. Verfahren nach einem der vorhergehenden Ansprüche,
wobei das Auswählen zwischen dem ersten Kanalzugriffsverfahren, dem zweiten Kanalzugriffsverfahren und einem dritten Kanalzugriffsverfahren erfolgt.

13. Verfahren nach einem der vorhergehenden Ansprüche,
wobei das dritte Kanalzugriffsverfahren einem konfliktfreien Kanalzugriffsverfahren entspricht.

14. Verfahren nach einem der vorhergehenden Ansprüche,
wobei die drahtlose Kommunikationsvorrichtung (10, 11; 800; 900) ein Zugangspunkt ist und die weitere drahtlose Kommunikationsvorrichtung (10, 11; 800; 900) eine mit dem Zugangspunkt assoziierte Station ist.

15. Verfahren nach einem der Ansprüche 1 bis 13,
wobei die weitere drahtlose Kommunikationsvorrichtung (10, 11; 800; 900) ein Zugangspunkt ist und die drahtlose Kommunikationsvorrichtung (10, 11; 800; 900) eine mit dem Zugangspunkt assoziierte Station ist.

16. Verfahren nach einem der vorhergehenden Ansprüche,
wobei das Drahtloskommunikationssystem auf einer Wireless Local Area Network-Technologie gemäß der IEEE 802.11-Standardfamilie basiert.

17. Drahtlose Kommunikationsvorrichtung (10; 11; 800; 900) für ein Drahtloskommunikationssystem, wobei die drahtlose Kommunikationsvorrichtung (10; 11; 800; 900) zu Folgendem ausgelegt ist:
Konfigurieren mindestens eines Drahtloskanals zur Kommunikation mit einer weiteren drahtlosen Kommunikationsvorrichtung (10; 11; 800; 900); und
individuellen Auswählen zwischen mindestens dem ersten Kanalzugriffsverfahren und dem zweiten Kanalzugriffsverfahren für jede von mehreren Klassen von Verkehr, der auf dem zweiten Drahtloskanal übertragen werden soll,
wobei jede Verkehrsklasse durch eine entsprechende Verkehrskennung identifiziert wird, und
wobei das Auswählen zwischen mindestens dem ersten Kanalzugriffsverfahren und dem zweiten Kanalzugriffsverfahren auf einer oder mehreren Zuordnungen eines von mindestens dem ersten Kanalzugriffsverfahren und dem zweiten Kanalzugriffsverfahren zu Verkehrskennungen basiert, und
wobei die drahtlose Kommunikationsvorrichtung dazu ausgelegt ist, eine Anzeige der einen oder der mehreren Zuordnungen an die weitere drahtlose Kommunikationsvorrichtung (10, 11; 800; 900) zu senden oder eine Anzeige der einen oder der mehreren Zuordnungen von der weiteren drahtlosen Kommunikationsvorrichtung (10, 11; 800; 900) zu empfangen.

18. Drahtlose Kommunikationsvorrichtung (10, 11; 800; 900) nach Anspruch 17,
wobei die drahtlose Kommunikationsvorrichtung (10, 11; 800; 900) zum Durchführen eines Verfahrens nach einem der Ansprüche 2 bis 16 konfiguriert ist.

19. Drahtlose Kommunikationsvorrichtung (10, 11; 800; 900) nach Anspruch 17 oder 18, umfassend:
mindestens einen Prozessor (950); und
einen Speicher (960), der Programmcode enthält, der von dem mindestens einen Prozessor ausgeführt werden kann,
wobei die Ausführung des Programmcodes durch den mindestens einen Prozessor (950) die drahtlose Kommunikationsvorrichtung (10, 11; 800; 900) zum Durchführen eines Verfahrens nach einem der Ansprüche 1 bis 16 veranlasst.

20. Computerprogramm oder Computerprogrammprodukt, umfassend Programmcode, der von mindestens einem Prozessor (950) einer drahtlosen Kommunikationsvorrichtung (10, 11; 800; 900) ausgeführt werden soll, wobei die Ausführung des Programmcodes die drahtlose Kommunikationsvorrichtung (10, 11; 800; 900) zum Durchführen eines Verfahrens nach einem der Ansprüche 1 bis 16 veranlasst.

## Revendications

1. Procédé de commande de transmissions sans fil dans un système de communication sans fil, le procédé comprenant :
par un dispositif de communication sans fil (10, 11 ; 800 ; 900), la configuration d'au moins un canal sans fil pour une communication avec un autre dispositif de communication sans fil (10, 11 ; 800 ; 900) ; et
individuellement pour chacune de multiples classes de trafic à transmettre sur l'au moins un canal sans fil, par le dispositif de communication sans fil (10, 11 ; 800 ; 900), la sélection entre au moins un premier procédé d'accès de canal et un deuxième procédé d'accès de canal ;
dans lequel chaque classe de trafic est identifiée par un identifiant de trafic correspondant, et
dans lequel la sélection entre au moins le premier procédé d'accès de canal et le deuxième procédé d'accès de canal est basée sur un ou plusieurs mappages d'un d'au moins le premier procédé d'accès de canal et le deuxième procédé d'accès de canal avec les identifiants de trafic, et
dans lequel le dispositif de communication sans fil envoie une indication des un ou plusieurs mappages à l'autre dispositif de communication sans fil (10, 11 ; 800 ; 900) ou reçoit une indication des un ou plusieurs mappages depuis l'autre dispositif de communication sans fil (10, 11 ; 800 ; 900).

2. Procédé selon la revendication 1, comprenant :
par le dispositif de communication sans fil (10, 11 ; 800 ; 900), la configuration d'au moins un premier canal sans fil et un deuxième canal sans fil pour une communication avec l'autre dispositif de communication sans fil (10, 11 ; 800 ; 900) ;
individuellement pour chacune des multiples classes de trafic à transmettre sur le premier canal sans fil, par le dispositif de communication sans fil (10, 11 ; 800 ; 900), la sélection entre au moins le premier procédé d'accès de canal et le deuxième procédé d'accès de canal ; et
individuellement pour chacune des multiples classes de trafic à transmettre sur le deuxième canal sans fil, par le dispositif de communication sans fil (10, 11 ; 800 ; 900), la sélection entre au moins le premier procédé d'accès de canal et le deuxième procédé d'accès de canal.

3. Procédé selon la revendication 2,
dans lequel, pour le premier canal sans fil, la sélection entre au moins le premier procédé d'accès de canal et le deuxième procédé d'accès de canal est basée sur un premier mappage d'un d'au moins le premier procédé d'accès de canal et le deuxième procédé d'accès de canal avec les identifiants de trafic, et
dans lequel, pour le deuxième canal sans fil, la sélection entre au moins le premier procédé d'accès de canal et le deuxième procédé d'accès de canal est basée sur un deuxième mappage d'un d'au moins le premier procédé d'accès de canal et le deuxième procédé d'accès de canal avec les identifiants de trafic.

4. Procédé selon la revendication 3,
dans lequel le deuxième mappage est différent du premier mappage.

5. Procédé selon l'une quelconque des revendications précédentes, comprenant :
pour au moins l'une des classes de trafic et sur la base d'une ou plusieurs conditions liées à l'au moins un canal sans fil, par le dispositif de communication sans fil (10, 11 ; 800 ; 900), la sélection à nouveau entre au moins le premier procédé d'accès de canal et le deuxième procédé d'accès de canal.

6. Procédé selon la revendication 5,
dans lequel les ou plusieurs conditions comprennent une quantité de données à transmettre par le dispositif de communication sans fil (10, 11 ; 800 ; 900), une quantité de données à transmettre par l'autre dispositif de communication sans fil (10, 11 ; 800 ; 900), un ou plusieurs identifiants de trafic associés à des données à transmettre par le dispositif de communication sans fil (10, 11 ; 800 ; 900), un ou plusieurs identifiants de trafic associés à des données à transmettre par l'autre dispositif de communication sans fil (10, 11 ; 800 ; 900), un ou plusieurs paramètres de qualité de service associés à des données à transmettre par le dispositif de communication sans fil (10, 11 ; 800 ; 900), un ou plusieurs paramètres de qualité de service associés à des données à transmettre par l'autre dispositif de communication sans fil (10, 11 ; 800 ; 900), un nombre de dispositifs de communication sans fil (10, 11 ; 800 ; 900) fonctionnant sur le même canal sans fil, et/ou une valeur d'utilisation de canal du canal sans fil.

7. Procédé selon la revendication 5 ou 6,
dans lequel au moins une des une ou plusieurs conditions est basée sur des mesures rapportées par l'autre dispositif de communication sans fil (10, 11 ; 800 ; 900) et/ou sur des mesures rapportées par un ou plusieurs dispositifs de communication sans fil (10, 11 ; 800 ; 900) supplémentaires.

8. Procédé selon l'une quelconque des revendications précédentes,
dans lequel, pour au moins une des classes de trafic, la sélection entre au moins le premier procédé d'accès de canal et le deuxième procédé d'accès de canal est basée sur un modèle d'apprentissage automatique.

9. Procédé selon la revendication 8,
dans lequel le modèle d'apprentissage automatique est entraîné sur la base de données d'entraînement comprenant des données indiquant des sélections entre au moins le premier procédé d'accès de canal et le deuxième procédé d'accès de canal et des données liées représentant des performances du système de communication sans fil.

10. Procédé selon l'une quelconque des revendications précédentes,
dans lequel, pour au moins une des classes de trafic, la sélection entre au moins le premier procédé d'accès de canal et le deuxième procédé d'accès de canal est coordonnée avec un ou plusieurs dispositifs de communication sans fil (10, 11 ; 800 ; 900) supplémentaires fonctionnant sur le même canal sans fil.

11. Procédé selon l'une quelconque des revendications précédentes,
dans lequel le premier procédé d'accès de canal correspond à un procédé d'accès de canal basé sur la contention et le deuxième procédé d'accès de canal correspond à un procédé d'accès de canal basé sur le déclenchement.

12. Procédé selon l'une quelconque des revendications précédentes,
dans lequel ladite sélection est entre le premier procédé d'accès de canal, le deuxième procédé d'accès de canal et un troisième procédé d'accès de canal.

13. Procédé selon l'une quelconque des revendications précédentes,
dans lequel le troisième procédé d'accès de canal correspond à un procédé d'accès de canal sans contention.

14. Procédé selon l'une quelconque des revendications précédentes,
dans lequel le dispositif de communication sans fil (10, 11 ; 800 ; 900) est un point d'accès et l'autre dispositif de communication sans fil (10, 11 ; 800 ; 900) est une station associée au point d'accès.

15. Procédé selon l'une quelconque des revendications 1 à 13,
dans lequel l'autre dispositif de communication sans fil (10, 11 ; 800 ; 900) est un point d'accès et le dispositif de communication sans fil (10, 11 ; 800 ; 900) est une station associée au point d'accès.

16. Procédé selon l'une quelconque des revendications précédentes,
dans lequel le système de communication sans fil est basé sur une technologie de réseau local sans fil selon la famille de normes IEEE 802.11.

17. Dispositif de communication sans fil (10, 11 ; 800 ; 900) pour un système de communication sans fil, le dispositif de communication sans fil (10, 11 ; 800 ; 900) étant adapté pour :
configurer au moins un canal sans fil pour une communication avec un autre dispositif de communication sans fil (10, 11 ; 800 ; 900) ; et
individuellement pour chacune de multiples classes de trafic à transmettre sur l'au moins un canal sans fil, sélectionner entre au moins un premier procédé d'accès de canal et un deuxième procédé d'accès de canal,
dans lequel chaque classe de trafic est identifiée par un identifiant de trafic correspondant, et
dans lequel la sélection entre au moins le premier procédé d'accès de canal et le deuxième procédé d'accès de canal est basée sur un ou plusieurs mappages d'un d'au moins le premier procédé d'accès de canal et le deuxième procédé d'accès de canal avec les identifiants de trafic, et
dans lequel le dispositif de communication sans fil est adapté pour envoyer une indication des un ou plusieurs mappages à l'autre dispositif de communication sans fil (10, 11 ; 800 ; 900) ou recevoir une indication des un ou plusieurs mappages depuis l'autre dispositif de communication sans fil (10, 11 ; 800 ; 900).

18. Dispositif de communication sans fil (10, 11 ; 800 ; 900) selon la revendication 17,
dans lequel le dispositif de communication sans fil (10, 11 ; 800 ; 900) est configuré pour réaliser un procédé selon l'une quelconque des revendications 2 à 16.

19. Dispositif de communication sans fil (10, 11 ; 800 ; 900) selon la revendication 17 ou 18, comprenant :
au moins un processeur (950), et
une mémoire (960) contenant un code de programme exécutable par l'au moins un processeur,
selon lequel une exécution du code de programme par l'au moins un processeur (950) amène le dispositif de communication sans fil (10, 11 ; 800 ; 900) à réaliser un procédé selon l'une quelconque des revendications 1 à 16.

20. Programme informatique ou produit de programme informatique comprenant un code de programme à exécuter par au moins un processeur (950) d'un dispositif de communication sans fil (10, 11 ; 800 ; 900), selon lequel une exécution du code de programme amène le dispositif de communication sans fil (10, 11 ; 800 ; 900) à réaliser un procédé selon l'une quelconque des revendications 1 à 16.
